# EUROPÄISCHE PATENTSCHRIFT

(11) **EP 1 800 925 B1**
(45) Veröffentlichungstag und Bekanntmachung des Hinweises auf die Patenterteilung: **27.10.2010**
(21) Anmeldenummer: 06024484.5
(22) Anmeldetag: 25.11.2006
(51) Int. Cl.: B60J 5/04, B60R 21/02

(54) **Kraftfahrzeugtür mit einer Seitenaufprallschutzeinrichtung**
Vehicle door with side impact protection device
Dispositif de protection en cas de choc latéral et porte de véhicule avec un tel dispositif

(30) Priorität: 24.12.2005 DE 102005062299
(43) Veröffentlichungstag der Anmeldung: 27.06.2007
(73) Patentinhaber: Dr. Ing. h.c. F. Porsche AG, 70435 Stuttgart (DE)
(72) Erfinder: Rieder, Klaus, 71287 Weissach-Flacht (DE); Fröschle, Mathias, 73760 Ostfildern (DE)

(56) Entgegenhaltungen:
- EP-A- 0 952 020
- DE-A1- 19 533 366
- DE-U1- 9 207 615
- DE-U1- 9 215 014
- JP-A- 5 319 092
- JP-A- 2001 246 935
- JP-A- 2005 035 395

## Beschreibung

Bei der Erfindung wird ausgegangen von einer Kraftfahrzeugtür mit einer Seitenaufprallschutzeinrichtung, gemäß Oberbegriff des Patentanspruchs 1.

Aus der JP 05 319 092 A bzw. DE 103 20 971 B3 sind solche Kraftfahrzeugtüren bekannt. Sie sind mit einer Seitenaufprallschutzeinrichtung ausgestattet, die parallel zur Fahrzeuglängsachse innerhalb der Kraftfahrzeugtür angeordnet ist. Die Seitenaufprallschutzeinrichtung umfasst einen Seitenaufprallträger und eine Befestigungseinrichtung, mit der der Seitenaufprallträger mit einem Türteil der Kraftfahrzeugtür verbunden werden kann. Die Befestigungseinrichtung besitzt eine Befestigungskonsole, die gemäß DE 103 20 971 B3 als Leichtmetall-Gussteil ausgeführt und mit dem Türteil verbunden ist. Die Befestigungskonsole weist eine gabelförmige Aufnahme auf, in die der Seitenaufprallträger eingesetzt ist. Die gabelförmige Aufnahme und der Seitenaufprallträger werden von einem Haltebolzen durchsetzt, wodurch der Seitenaufprallträger an der Aufnahme festgehalten ist. Ferner weist die gabelförmige Aufnahme zwei dem Seitenaufprallträger zugewandte und einander mit Abstand gegenüberliegende Innenflächen sowie einen Gabelgrund auf, so dass die Aufnahme etwa U-förmig ausgeführt ist. Bei der bekannten Kraftfahrzeugtür verlaufen die einander gegenüberliegenden Innenflächen parallel zueinander. Entsprechend ist der Seitenaufprallträger im Querschnitt kastenförmig bzw. rechteckig ausgeführt, er kann aber gemäß JP 05 319 092 A nach oben und unten gerichtete Fortsätze aufweisen.

In der DE 92 18 388 U1 ist ein Seitenaufprallträger für eine Kraftfahrzeugtür beschrieben, der einen trapezförmigen Querschnitt aufweist. Die Befestigung des Seitenaufprallträgers an der Kraftfahrzeugtür ist dort allerdings nicht gezeigt.

Der Erfindung liegt die Aufgabe zugrunde, eine Kraftfahrzeugtür mit einer Seitenaufprallschutzeinrichtung anzugeben, bei der die Befestigungseinrichtung einfach hergestellt werden kann.

Gelöst wird diese Aufgabe mit einer Kraftfahrzeugtür, die die in Anspruch 1 genannten Merkmale aufweist. Ausgestaltungen der Erfindung sind in den Unteransprüchen angegeben.

Die mit der Erfindung hauptsächlich erzielten Vorteile sind darin zu sehen, dass die Befestigungskonsole, die als Gussteil ausgeführt ist, einfach aus ihrer Gießform entnommen werden kann, da sich die gabelförmige Aufnahme in ihrer vom Gabelgrund weggerichteten Richtung erweitert. Ein Kern der Gießform kann somit leicht aus der gabelförmigen Aufnahme herausgezogen werden. Die einfache Herstellung der Befestigungseinrichtung ergibt sich aber auch dadurch, dass die Innenflächen der gabelförmigen Ausnahme als unbearbeitete Gussflächen vorliegen. Unbearbeitete Innenflächen bzw. Gussflächen sind im Zuge dieser Anmeldung Flächen am Gussteil, die keiner spanenden Bearbeitung unterzogen wurden. Bei den unbearbeiteten Gussflächen ergibt sich der Vorteil, dass die Kerbwirkung in der gabelförmigen Aufnahme reduziert ist, wobei eine derartige Kerbwirkung in vielen Fällen durch spanende, scharfe Werkzeuge dadurch erzeugt werden, dass scharfkantige Eckbereiche oder Einschnitte in die Gusshaut eingebracht werden. Es hat sich ferner als besonders vorteilhaft herausgestellt, dass der Seitenaufprallträger mit seinem in die gabelförmige Aufnahme passenden Querschnitt gegenüber den aus dem Stand der Technik bekannten rechteckigen bzw. kastenförmigen Profilen einen optimierten Seitenaufprallschutz bieten kann, wobei der Seitenaufprallträger so in die gabelförmige Aufnahme eingesetzt ist, dass seine obere und untere Trägerwand parallel zu deren Innenflächen verlaufen.

Nach einer in Anspruch 2 angegebenen Weiterbildung der Erfindung ist vorteilhaft, dass durch das spielfreie Halten des Seitenaufprallträgers innerhalb der gabelförmigen Aufnahme im Betrieb des Kraftfahrzeugs Klappergeräusche durch einen losen Seitenaufprallträger vermieden werden können.

Ein besonders bevorzugtes Ausführungsbeispiel ist in Anspruch 4 angegeben. Vorteilhaft ist hierbei, dass der Gabelsteg mit einer gegenüber dem anderen Gabelsteg reduzierten Materialstärke sich an den Seitenaufprallträger anlegen kann, wodurch das eingangs erwähnte spielfreie Halten des Seitenaufprallträgers in der Aufnahme vorteilhaft erreicht werden kann, da sich der dünnere der beiden Gabelstege in Richtung Seitenaufprallträger anlegen kann. Besonders vorteilhaft ist diese Ausgestaltung, wenn nach einer bevorzugten Ausführungsform der Haltebolzen durch eine Schraube mit einem Schraubenkopf gebildet wird.

Nach einer in Anspruch 5 angegebenen Ausführungsvariante wird der Haltebolzen vorteilhafter Weise lediglich in dem Gabelsteg festgelegt, der die größere Materialstärke aufweist. Der andere Gabelsteg wird von dem Haltebolzen lediglich frei durchgriffen.

Entsprechend einem in Anspruch 6 angegebenen Ausführungsbeispiel ist vorteilhaft, dass das gesamte Türinnenteil mit der gabelförmigen Aufnahme einfach aus der Gießform entformt werden kann.

Eine in Anspruch 7 angegebene Weiterbildung der Erfindung weist den Vorteil auf, dass der Seitenaufprallträger einfach in das Türinnenteil eingesetzt werden kann, wenn das Außenblech noch nicht mit dem Türinnenteil verbunden ist.

Die Erfindung wird nachfolgend anhand von Ausführungsbeispielen mit Bezug auf die Zeichnung näher erläutert. Es zeigen:
- Fig. 1: in perspektivischer Ansicht ein Kraftfahrzeug mit einer Kraftfahrzeugtür,
- Fig.2+3: jeweils einen Schnitt durch die Kraftfahrzeugtür entsprechend den Schnittlinien II-II und III-III in Fig. 1 und
- Fig.4+5: jeweils ein Ausführungsbeispiel eines Seitenaufprallträgers.

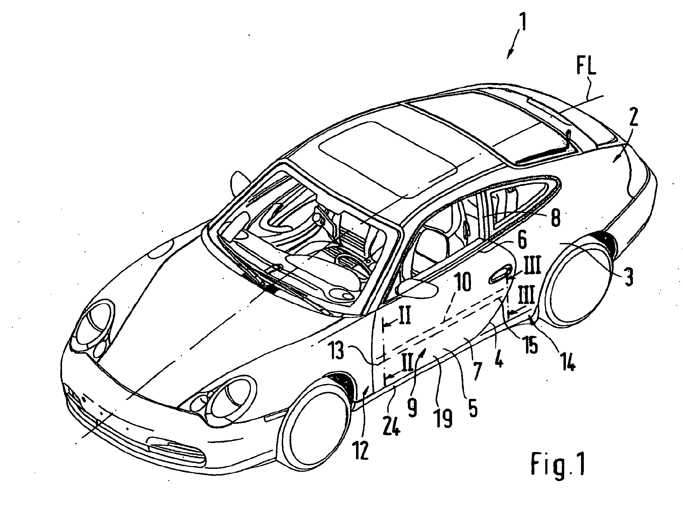

Die Fig. 1 zeigt ein Kraftfahrzeug 1, welches eine Karosserie 2 mit einer Seitenwand 3 aufweist, in der ein Türausschnitt 4 eingebracht ist, in den eine Kraftfahrzeugtür 5 beweglich eingesetzt ist. Die Kraftfahrzeugtür, die im folgenden lediglich als Tür 5 bezeichnet wird, besitzt unterhalb einer Gürtellinie 6 einen hohlen Türkörper 7, in den eine oberhalb der Gürtellinie 6 in ihrer Schließstellung vorliegende Fensterscheibe 8 in eine abgesenkte Position (nicht gezeigt) hinein verlagerbar ist.

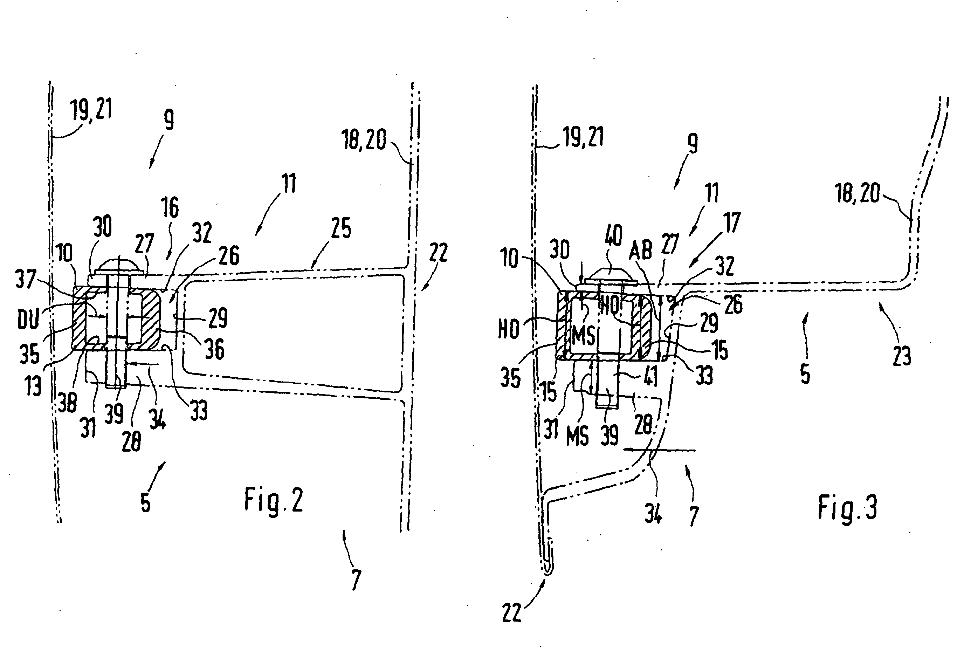

In den Türkörper 7 ist ferner eine Seitenaufprallschutzeinrichtung 9 fest eingesetzt, die einen etwa parallel zur Fahrzeuglängsachse FL verlaufenden Seitenaufprallträger 10 und eine in den Fig. 2 und 3 dargestellte Befestigungseinrichtung 11 umfasst, über die der Seitenaufprallträger 10 mit dem Türkörper 7 verbunden wird. Der Seitenaufprallträger weist einen benachbart zur A-Säule 12 liegenden vorderen Endabschnitt 13 und einen benachbart zur B-Säule 14 liegenden hinteren Endabschnitt 15 auf. Über die Befestigungseinrichtung 11 werden der vordere und hintere Endabschnitt 13 und 15 des Seitenaufprallträgers 10 mit dem Türkörper 7 verbunden.

In Fig. 2 ist in einer Schnittdarstellung durch den Türkörper 7 eine vordere Befestigungskonsole 16 der Befestigungseinrichtung 11 dargestellt. In Fig. 3 ist eine hintere Befestigungskonsole 17 der Befestigungseinrichtung 11 zu sehen. Der Seitenaufprallträger 10 erstreckt sich also zwischen den beiden Befestigungskonsolen 16 und 17. Der Türkörper 7 der Tür 5 wird vorzugsweise aus zumindest zwei Türteilen 18 und 19 zusammengesetzt, von denen das Türteil 18 als so genanntes Türinnenteil 20 ausgeführt und das Türteil 19 von einem Außenblech 21 gebildet ist, welches in einem Randbereich 22 der Tür 5 mit dem Türinnenteil 20 verbunden ist. Das Türinnenteil 20 ist vorzugsweise einstückig als Leichtmetall-Gussteil ausgeführt und weist mehrere Rahmenschenkel auf, von denen ein aufrechter Rahmenschenkel 22 benachbart zur A-Säule 12, ein weiterer aufrechter Rahmenschenkel 23 benachbart zur B-Säule 15 und ein unterer Rahmenschenkel, der nicht dargestellt ist, benachbart zu einem Seitenschweller 24 (siehe Fig. 1) und parallel dazu verläuft. Ferner kann ein nicht dargestellter, die beiden aufrechten Rahmenschenkel 22 und 23 verbindender oberer Rahmenschenkel vorgesehen sein, der parallel und unterhalb der Gürtellinie 6 verläuft, so dass das Türinnenteil 20 auch als umlaufender Rahmen bezeichnet werden kann.

Jede der Befestigungskonsolen 16 und 17 ist als Leichtmetall-Gussteil ausgeführt und vorzugsweise einstückig mit dem Türteil 18 bzw. Türinnenteil 20 hergestellt. Die vordere Befestigungskonsole 16 ist über einen Basisabschnitt 25 mit dem Türinnenteil 20 verbunden. Die hintere Befestigungskonsole 17 geht direkt, also ohne Basisteil 25, von dem Türinnenteil 20 aus. Die Befestigungskonsolen 16 und 17 weisen als Gemeinsamkeit jeweils eine gabelförmige Aufnahme 26 mit einem freistehenden oberen Gabelsteg 27 und einem unteren freistehenden Gabelsteg 28 auf, die über einen innenliegenden Gabelgrund 29 miteinander verbunden sind. Die freien Enden 30 und 31 der Gabelstege 27 und 28 enden benachbart zum Türaußenblech 21. Die Gabelstege 27 und 28 nehmen zwischen sich den Seitenaufprallträger 10 nahezu spielfrei auf. Dabei sind an den Gabelstegen 27 und 28 ausgebildete Innenflächen 32 und 33 der gabelförmigen Aufnahme 26 derart ausgerichtet, dass sich die gabelförmige Aufnahme 26 - ausgehend von dem Gabelgrund 29 - in Richtung zum Türaußenblech 21, also in einer vom Gabelgrund 29 weggerichteten Richtung 34 erweitert. Die Innenflächen 32 und 33, die einander mit Abstand AB gegenüberliegen, sind als unbearbeitete Gussflächen ausgeführt. Da sich die gabelförmige Aufnahme 26 in Richtung des Türaußenblechs 21 erweitert, nimmt der Abstand AB - ausgehend vom Gabelgrund 29 - in Richtung der freien Enden 30 und 31 der Gabelstege 27 und 28 vorzugsweise stetig bzw. kontinuierlich zu. Entsprechend der gabelförmigen Aufnahme 26 ist der Seitenaufprallträger 10 im Querschnitt trapezförmig ausgeführt und so an die sich erweiternde Aufnahme 26 angepasst. Der Seitenaufprallträger 10 ist als Hohlprofil ausgeführt und weist definitionsgemäß einen Druckgurt 35 und einen Zuggurt 36 auf. Der Druckgurt 35 liegt benachbart zum Türaußenblech 21 und der Zuggurt 36 liegt nahe bei dem Gabelgrund 29. Verbunden werden die beiden Gurte 35 und 36 über eine obere Trägerwand 37 und eine untere Trägerwand 38. Um den trapezförmigen Querschnitt erzielen zu können, ist die Höhe HO des Zuggurtes 36 geringer als die Höhe HO des Druckgurtes 35 und die Trägerwände 37 und 38 verlaufen parallel zu den Innenflächen 32 und 33 der gabelförmigen Aufnahme 26. Vorzugsweise ist der Seitenaufprallträger 10 spielfrei innerhalb der Aufnahme 26 zwischen den Innenflächen 32 und 33 gehalten. Dafür können enge Toleranzen zwischen Aufnahme 26 und Seitenaufprallträger 10 vorgesehen sein. Es kann aber auch vorgesehen sein, dass die gabelförmige Aufnahme 26 über einen die Aufnahme 26 und den Seitenaufprallträger 10 durchdringenden Haltebolzen 39 leicht zusammengespannt wird, also der Seitenaufprallträger 10 zwischen den Gabelstegen 27 und 28 gehalten ist. Der Haltebolzen 39 ist vorzugsweise als Schraube mit einem Schraubenkopf 40 und einem Schraubenschaft 41 ausgeführt. Der Schraubenschaft 41 durchdringt einen der Gabelstege 26 oder 27 frei und ist in dem anderen Gabelsteg 28 oder 27, beispielsweise über ein Gewinde festgelegt. Im Ausführungsbeispiel weist der untere Gabelsteg 28 ein Gewinde auf, in das der Schraubenschaft 41 eingedreht ist. Der obere Gabelsteg 27 wird von dem Schraubenschaft 41 frei durchgriffen. Im gezeigten Ausführungsbeispiel ist ferner einer der beiden Gabelstege mit einer Materialstärke MS ausgeführt, die geringer als die Materialstärke MS des anderen Gabelstegs ist. Vorzugsweise ist der obere Gabelsteg 27 mit einer geringeren Materialstärke MS ausgestattet als der untere Gabelsteg 28. Dadurch ist es auf einfache Weise möglich, beim Festziehen des Haltebolzens 39 den oberen Gabelsteg in Richtung des Seitenaufprallträgers 10 zu spannen, wodurch dessen spielfreies Halten innerhalb der Aufnahme 26 begünstigt werden kann. Durch die Materialstärke MS des unteren Gabelsteges 28 kann das darin ausgebildete Gewinde eine ausreichende Länge aufweisen, damit der Haltebolzen 39 sicher festgelegt werden kann.

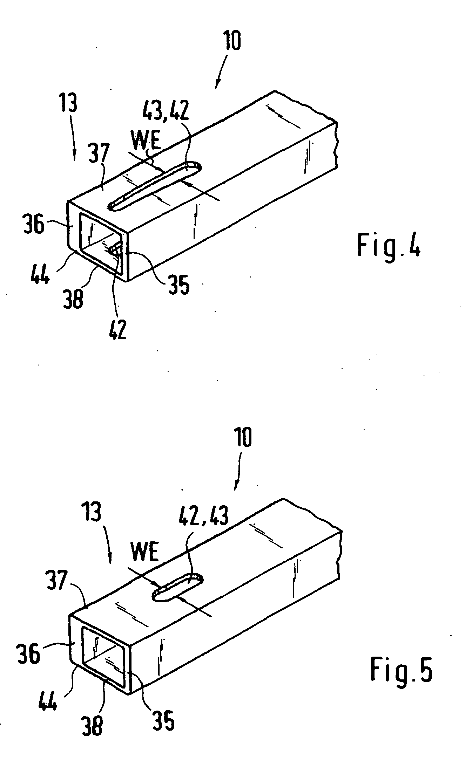

In den Fig. 4 und 5 ist jeweils ein Ausführungsbeispiel eines Seitenaufprallträgers 10 dargestellt. Gleiche bzw. gleichwirkende Teile wie in den übrigen Figuren sind mit denselben Bezugszeichen versehen. In den Fig. 4 und 5 ist lediglich der vordere Endabschnitt 13 des Seitenaufprallträgers 10 dargestellt. In diesem vorderen Endabschnitt 13 ist sowohl in der oberen als auch in der unteren Trägerwand 37 und 38 ein Durchbruch 42 eingebracht, der als in Fahrzeuglängsrichtung FL verlaufende Langloch 43 ausgeführt ist. Die beiden in Fig. 4 und 5 dargestellten Ausführungsbeispiele unterscheiden sich dadurch, dass das Langloch 43 in Fig. 4 seine Weite WE in Richtung des Endes 44 des Seitenaufprallträgers 10 verringert. Beim Seitenaufprallträger 10 gemäß Fig. 5 hingegen ist das Langloch 43 mit konstanter Weite WE ausgeführt. Außerdem weist das Langloch 43 beim in Fig. 5 gezeigten Ausführungsbeispiel eine geringere Länge auf, die parallel zur Fahrzeuglängsachse FL gemessen wird. Die Wirkung derartiger Langlöcher, die von dem Haltebolzen 39 durchgriffen werden, ist in der eingangs erwähnten DE 103 20 971 B3 beschrieben, so dass hier nicht weiter darauf eingegangen wird. Hervorzuheben bleibt somit die besondere Ausgestaltung des Langlochs 43 in Fig. 4, welches seine Weite WE in seiner Längsrichtung parallel zur Fahrzeuglängsachse FL verringert. Dabei ist insbesondere vorgesehen, dass diese Weite WE zumindest abschnittsweise geringer als der Durchmesser DU des Haltebolzens 39 gewählt wird.

## Patentansprüche

1. Kraftfahrzeugtür (5) mit einer Seitenaufprallschutzeinrichtung (9), die einen Seitenaufprallträger (10) und eine Befestigungseinrichtung (11) aufweist, um den Seitenaufprallträger (10) mit einem Türteil (18, 19) verbinden zu können, welche Befestigungseinrichtung (11) zumindest eine mit dem Türteil (18, 19) verbundene, als Gussteil ausgeführte Befestigungskonsole (16, 17) mit einer gabelförmigen Aufnahme (26) für den Seitenaufprallträger (10) und einen den Seitenaufprallträger (10) und die gabelförmige Aufnahme (26) durchdringenden Haltebolzen (39) besitzt, wobei die gabelförmige Aufnahme (26) zumindest zwei dem Seitenaufprallträger (10) zugewandte und einander mit Abstand (AB) gegenüberliegende Innenflächen (32, 33) und einen Gabelgrund (29) umfasst, **dadurch gekennzeichnet, dass** sich die gabelförmige Aufnahme (26) mit ihren Innenflächen (32, 33) in ihrer von dem Gabelgrund (29) weggerichteten Richtung (34) erweitert, dass die Innenflächen (32, 33) als unbearbeitete Gussflächen ausgebildet sind und dass der Seitenaufprallträger (10) einen trapezförmigen, an die sich erweiternde Aufnahme (26) angepassten Querschnitt aufweist, wobei der Seitenaufprallträger (10) eine obere und untere Trägerwand (37, 38) aufweist, die parallel zu den Innenflächen (32, 33) der gabelförmigen Aufnahme (26) verlaufen.

2. Kraftfahrzeugtür nach Anspruch 1, **dadurch gekennzeichnet, dass** der Seitenaufprallträger (10) im Wesentlichen spielfrei zu den Innenflächen (32, 33) innerhalb der gabelförmigen Aufnahme (26) gehalten ist.

3. Kraftfahrzeugtür nach Anspruch 1 oder 2, **dadurch gekennzeichnet, dass** die gabelförmige Aufnahme (26) zwei freistehende Gabelstege (27, 28) aufweist, die die Innenflächen (32, 33) aufweisen.

4. Kraftfahrzeugtür nach Anspruch 3, **dadurch gekennzeichnet, dass** die beiden Gabelstege (27, 28) mit unterschiedlicher Materialstärke (MS) ausgestattet sind.

5. Kraftfahrzeugtür nach Anspruch 4, **dadurch gekennzeichnet, dass** der Haltebolzen (39) in dem Gabelsteg (28) mit einer größeren Materialstärke (MS) festgelegt ist und den anderen Gabelsteg (27) lediglich frei durchgreift.

6. Kraftfahrzeugtür nach Anspruch 1, **dadurch gekennzeichnet, dass** die Befestigungskonsole (16, 17) mit einem das Türteil (18) bildenden Türinnenteil (20) einstückig als Leichtmetall-Gussteil ausgeführt ist.

7. Kraftfahrzeugtür nach einem der Ansprüche 3 bis 6, **dadurch gekennzeichnet, dass** die Kraftfahrzeugtür (5) aus einem Türinnenteil (20) und einem Außenblech (21) zusammengesetzt ist und dass die Gabelstege (27, 28) mit ihren freien Enden (30, 31) benachbart zum Außenblech (21) liegen.

## Claims

1. Motor vehicle door (5) with a lateral impact protection device (9), which has a lateral impact beam (10) and a fastening device (11) in order for it to be possible to connect the lateral impact beam (10) to a door part (18, 19), which fastening device (11) has at least one fastening bracket (16, 17) made in the form of a cast part and connected to the door part (18, 19), with a fork-shaped seat (26) for the lateral impact beam (10), and a holding bolt (39) which passes through the lateral impact beam (10) and the fork-shaped seat (26), the fork-shaped seat (26) comprising at least two inner surfaces (32, 33) which face the lateral impact beam (10) and lie opposite one another with a spacing (AB) and a fork bottom (29), **characterized in that** the fork-shaped seat (26) widens with its inner surfaces (32, 33) in its direction (34) pointing away from the fork bottom (29), **in that** the inner surfaces (32, 33) are designed as unfinished cast surfaces, and **in that** the lateral impact beam (10) has a trapezoidal cross section adapted to the widening seat (26), the lateral impact beam (10) having an upper and lower beam wall (37, 38), which run parallel to the inner surfaces (32, 33) of the fork-shaped seat (26).

2. Motor vehicle door according to Claim 1, **characterized in that** the lateral impact beam (10) is held inside the fork-shaped seat (26) in an essentially play-free manner in relation to the inner surfaces (32, 33).

3. Motor vehicle door according to Claim 1 or 2, **characterized in that** the fork-shaped seat (26) has two self-supporting fork webs (27, 28), which have the inner surfaces (32, 33).

4. Motor vehicle door according to Claim 3, **characterized in that** the two fork webs (27, 28) are provided with different material thickness (MS).

5. Motor vehicle door according to Claim 4, **characterized in that** the holding bolt (39) is fixed in the fork web (28) of greater material thickness (MS) and only extends freely through the other fork web (27).

6. Motor vehicle door according to Claim 1, **characterized in that** the fastening bracket (16, 17) is made in one piece as a light metal cast part with a door inner part (20) forming the door part (18).

7. Motor vehicle door according to one of Claims 3 to 6, **characterized in that** the motor vehicle door (5) consists of a door inner part (20) and an outer panel (21), and **in that** the fork webs (27, 28) lie with their free ends (30, 31) adjacent to the outer panel (21).

## Revendications

1. Porte de véhicule (5) avec un dispositif de protection contre un choc latéral (9), qui comprend un renfort anti-choc latéral (10) et un dispositif de fixation (11) pour pouvoir assembler le renfort anti-choc latéral (10) à une partie de porte (18, 19), dispositif de fixation (11) qui comporte au moins une console de fixation (16, 17) constituée par une pièce moulée, assemblée à la partie de porte (18, 19), avec un logement en forme de fourche (26) pour le renfort anti-choc latéral (10), et un boulon de fixation (39) traversant le renfort anti-choc latéral (10) et le logement en forme de fourche (26), dans laquelle le logement en forme de fourche (26) comprend au moins deux faces intérieures (32, 33) opposées à distance (AB) l'une de l'autre et tournées vers le renfort anti-choc latéral (10) et un fond de fourche (29), **caractérisée en ce que** le logement en forme de fourche (26) s'élargit, par ses faces intérieures (32, 33), dans leur direction (34) s'éloignant du fond de fourche (29), **en ce que** les faces intérieures (32, 33) sont des faces brutes de coulée et **en ce que** le renfort anti-choc latéral (10) présente une section transversale trapézoïdale, adaptée au logement qui s'élargit (26), dans laquelle le renfort anti-choc latéral (10) présente des parois de renfort supérieure et inférieure (37, 38) qui sont parallèles aux faces intérieures (32, 33) du logement en forme de fourche (26).

2. Porte de véhicule selon la revendication 1, **caractérisée en ce que** le renfort anti-choc latéral (10) est maintenu à l'intérieur du logement en forme de fourche (26), essentiellement sans jeu par rapport aux faces intérieures (32, 33).

3. Porte de véhicule selon la revendication 1 ou 2, **caractérisée en ce que** le logement en forme de fourche (26) présente deux ailes de fourche saillantes libres (27, 28), qui présentent les faces intérieures (32, 33).

4. Porte de véhicule selon la revendication 3, **caractérisée en ce que** les deux ailes de fourche (27, 28) présentent une épaisseur de matière différente (MS).

5. Porte de véhicule selon la revendication 4, **caractérisée en ce que** le boulon de fixation (39) est fixé dans l'aile de fourche (28) présentant la plus forte épaisseur de matière (MS) et traverse uniquement librement l'autre aile de fourche (27).

6. Porte de véhicule selon la revendication 1, **caractérisée en ce que** la console de fixation (16, 17) est réalisée en une seule pièce, sous la forme d'une pièce moulée en métal léger, avec la partie intérieure de porte (20) formant la partie de porte (18).

7. Porte de véhicule selon l'une quelconque des revendications 3 à 6, **caractérisée en ce que** la porte de véhicule (5) est composée d'une partie intérieure de porte (20) et d'une tôle extérieure (21) et **en ce que** les ailes de fourche (27, 28) ont leurs extrémités libres (30, 31) situées à proximité de la tôle extérieure (21).
